# EUROPÄISCHE PATENTSCHRIFT

(11) **EP 4 065 394 B1**
(45) Veröffentlichungstag und Bekanntmachung des Hinweises auf die Patenterteilung: **24.01.2024**
(21) Anmeldenummer: 21704782.8
(22) Anmeldetag: 11.02.2021
(51) Int. Cl.: B60G 7/00, B60G 9/00, B29C 65/48, F16B 11/00

(54) **LENKERSYSTEM**
CONTROL ARM SYSTEM
SYSTÈME DE BRAS DE SUSPENSION

(30) Priorität: 13.02.2020 DE 102020103762
(43) Veröffentlichungstag der Anmeldung: 05.10.2022
(73) Patentinhaber: SAF-HOLLAND GmbH, 63856 Bessenbach (DE)
(72) Erfinder: BIEWER, Frederik, 63808 Haibach (DE)
(74) Vertreter: Müller Schupfner & Partner Patent- und Rechtsanwaltspartnerschaft mbB
(86) Internationale Anmeldenummer: PCT/EP2021/053336
(87) Internationale Veröffentlichungsnummer: WO 2021/160739

(56) Entgegenhaltungen:
- EP-A1- 1 125 775
- EP-A1- 1 197 359
- DE-A1-102005 038 274
- DE-A1-102011 086 481
- DE-A1-102014 005 023
- DE-A1-102014 218 159
- DE-A1-102014 218 323
- DE-A1-102015 117 757
- DE-B3- 10 231 376
- US-A1- 2007 145 702

## Beschreibung

Die vorliegende Erfindung betrifft ein Lenkersystem insbesondere zum Einsatz in Nutzfahrzeugen.

Derartige Lenkersysteme, insbesondere bestehend aus einem Längslenker, welcher schwenkbar am Rahmen eines Fahrzeuges festgelegt ist und entsprechenden Federmitteln, wie beispielsweise Luftfedern oder Stahlfedern, sind aus dem Stand der Technik bekannt. Bei den aus dem Stand der Technik bekannten Lenkersystemen kommen zumeist Schweißverbindungen oder Schraubverbindungen zur Festlegung einzelner Bestandteile eines Längslenkers aneinander, oder an einer Fahrwerksanordnung, zum Einsatz. Insbesondere Schweißverbindungen weisen dabei den Nachteil auf, dass sie zum einen sehr aufwändig in ihrer Herstellung sind und zum anderen nur zwischen Bauteilen aus dem im Wesentlichen selben metallischen Material hergestellt werden können. Weiterhin verursachen Schweißverbindungen oft Materialspannungen, welche die Gesamtfestigkeit des zusammengeschweißten Bauteiles beeinträchtigen und verschlechtern können. Schraubverbindungen sind in Bezug auf den erforderlichen zusätzlichen Materialeinsatz meist nicht gewichtsoptimiert. Auch treten bei Schraubverbindungen ebenfalls lokal hochbelastete Zonen im Bereich der Schrauben und Muttern sowie im Bereich der Bauteile, die miteinander verschraubt werden, auf, welche lokale Materialrisse verursachen können und insbesondere bei periodischen Dauerbeanspruchungen eine zu geringe Lebensdauer aufweisen können.

Die Entgegenhaltungen DE 10 2015 117 757 A1, DE 10 2014 218 159 A, US 2007/145702 A1 und EP 1 197 359 A1 zeigen Lenkersysteme, welche zweiteilig oder einteilig ausgebildet sind, wobei die zweiteiligen Ausführungsformen in der Regel durch Schweißen verbunden sind.

Die Entgegenhaltung DE 10 2014 005 023 A1 offenbart einen zweiteiligen Längslenker, welcher aus einem vorderen und einem hinteren Lenkerteil aufgebaut ist, wobei die Lenkerteile lösbar aneinander festgelegt sind und form- und kraftschlüssig gegen ein Achsrohr gezwungen werden.

Dokument DE 10 2005 038 274 A1 offenbart einen Längslenker mit einem Klemmbereich, welcher gegen ein Achsrohr geklemmt wird, wobei im Klemmbereich zwischen dem Längslenker und dem Achsrohr ein Kleber eingebracht werden kann. Aufgabe der vorliegenden Erfindung ist es, ein Lenkersystem bereitzustellen, bei welchem die Bestandteile des Lenkers auf besonders günstige Weise miteinander verbunden werden können und somit ein flexibles Lenkersystem bereitgestellt werden kann.

Diese Aufgabe wird gelöst mit einem Lenkersystem mit den Merkmalen von Anspruch 1. Weitere Vorteile und Merkmale der vorliegenden Erfindung ergeben sich aus den abhängigen Ansprüchen.

Gemäß einem ersten Aspekt der Erfindung weist das Lenkersystem einen Grundkörper und ein Halteelement auf, wobei der Grundkörper eine grundkörperseitige Kontaktfläche und das Halteelement eine halteseitige Kontaktfläche aufweist, wobei der Grundkörper an seinem ersten distalen Ende einen Lagerbereich für eine schwenkbare Aufhängung aufweist, wobei die grundkörperseitige Kontaktfläche an dem dem ersten Ende gegenüberliegenden Ende des Grundkörpers angeordnet ist, wobei das Halteelement einen Befestigungsabschnitt zur Festlegung eines Federelements aufweist. In einer ersten Variante der Erfindung ist das Halteelement mittels eines zwischen der grundkörperseitigen und der halteseitigen Kontaktfläche eingebrachten Klebers am Grundkörper festlegbar und festgelegt. Alternativ oder zusätzlich gemäß einer zweiten Variante der Erfindung ist ein Achskörper mit einer achsseitigen Kontaktfläche vorgesehen, wobei der Grundkörper mittels eines zwischen der grundkörperseitigen Kontaktfläche und der achsseitigen Kontaktfläche eingebrachten Klebers am Achskörper festgelegt ist, wobei das Halteelement mittels eines zwischen der halteseitigen Kontaktfläche und der achsseitigen Kontaktfläche eingebrachten Klebers am Achskörper festgelegt ist. Das erfindungsgemäße Lenkersystem zeichnet sich insbesondere durch einen Grundkörper und ein an diesen Grundkörper festzulegendes Halteelement aus. Der Grundkörper ist dabei mit Vorteil der Lenkerarm bzw. Längslenker eines Fahrwerkssystems und ist in seinem Lagerbereich, welcher vorzugsweise als Lagerbuchse ausgebildet ist, schwenkbar am Rahmen des Nutzfahrzeuges festlegbar. Weiterhin ist der Grundkörper vorzugsweise dafür ausgelegt, einen Achskörper zu halten und Einfederbewegungen vom Achskörper aufzunehmen und den Achskörper dabei relativ zum Rahmen des Fahrzeuges zu positionieren. Weiterhin weist das Lenkersystem ein Halteelement auf, welches als separates Bauteil vom Grundkörper hergestellt wird und mittels eines Klebers stoffschlüssig am Grundkörper und/oder am Achskörper festgelegt ist. Der Achskörper ist üblicherweise ein starres Achsrohr, welches im Wesentlichen hohl ist und einen im Wesentlichen konstanten, kreisringförmigen oder rechteckigen Querschnitt aufweist. Das Halteelement wird oft als "tail end" bezeichnet und dient insbesondere der Lagerung bzw. Festlegung eines Federelementes, insbesondere einer Luftfeder, am Lenkersystem. Der Vorteil einer separaten Ausbildung des Halteelementes vom Grundkörper liegt darin, dass für verschiedene Fahrwerkstypen ein und derselbe Grundkörper verwendet werden kann und das Halteelement zur Festlegung der Feder jeweils individuell und an den jeweiligen Fahrzeugtyp angepasst ausgewählt und auf einfache Weise am Grundkörper bzw. am Achskörper festgelegt werden kann. Hierdurch ergeben sich sehr geringe Herstellungskosten der einzelnen Komponenten des Lenkersystems, da der massivere Grundkörper einheitlich verwendet werden kann und durch die Variation der jeweiligen Halteelementtypen, welche insgesamt geringeres Gewicht und geringere Erstreckungen aufweisen, das Lenkersystem für eine Vielzahl von Fahrzeugen, insbesondere Nutzfahrzeugen, eingesetzt werden kann. Der Grundkörper und das Halteelement sind dabei unmittelbar aneinander, das heißt durch direktes Aufeinanderkleben der Kontaktflächen am Grundkörper und am Halteelement zusammengefügt. Alternativ oder zusätzlich kann auch eine mittelbare Befestigung des Grundkörpers am Halteelement über einen dazwischen angeordneten Achskörper vorgesehen sein, wobei der Grundkörper mit seiner grundkörperseitigen Kontaktfläche und das Halteelement mit seiner halteseitigen Kontaktfläche jeweils an einer achsseitigen Kontaktfläche zur Anlage gelangt und dort mittels eines Klebers stoffschlüssig festgelegt wird. Diese beiden grundsätzlichen Befestigungsmöglichkeiten des Halteelements am Grundkörper erlauben eine große Variantenvielfalt und insbesondere eine relativ freie Positionierung des Achskörpers entweder am Grundkörper oder im Schnittstellenbereich zwischen dem Halteelement und dem Grundkörper, was eine vorteilhaft große Gestaltungsfreiheit und somit eine vorteilhafte Variabilität des Lenkersystems erlaubt. Im Unterschied zu den aus dem Stand der Technik bekannten Lenkersystemen muss dabei zur Festlegung eines Halteelementes am Grundkörper keine Schweißverbindung oder eine aufwändige und gewichtsintensive Schraubverbindung hergestellt werden und es kann somit materialschonend und gewichtsoptimiert ein Lenkersystem aus einem Grundkörper und einem variabel auswählbaren Halteelement hergestellt werden.

In einer erfindungsgemäßen Ausführungsform ist zwischen dem Grundkörper und dem Halteelement sowie zwischen dem Grundkörper und dem Achselement und zwischen dem Halteelement und dem Achselement eine Klebeverbindung mittels des Klebers hergestellt. Mit Vorteil ist somit das Achselement im Schnittstellenbereich zwischen dem Grundkörper und dem Halteelement angeordnet, wobei sowohl am Grundkörper als auch am Halteelement Kontaktflächen ausgebildet sind, welche eine Verklebung unmittelbar zwischen dem Grundkörper und dem Halteelement und jeweils eine weitere Verklebung zusätzlich mit dem Achselement ermöglichen. Mit Vorteil sind dabei die Kontaktflächen derart angeordnet, dass bei Belastung des Halteelementes und des Grundkörpers im Betrieb des Nutzfahrzeuges insbesondere senkrecht zur Kontaktfläche wirkende Zugkräfte auftreten, welche eine Normalbelastung der Klebverbindung verursachen, die besonders effektiv durch die vom Kleber aufgebrachte Adhäsionskraft ermöglichen. Auf diese Weise kann zur Festlegung des Grundkörpers am Halteelement sowie des Achselementes an zumindest einem vom Grundkörper und Halteelement eine besonders feste Verbindung ausschließlich mittels des Klebers erreicht werden. Besonders bevorzugt weist zumindest eine der Kontaktflächen eine Rautiefe von 100 bis 200 µm, vorzugsweise von ca. 150 bis 170 µm auf. Insbesondere ist dabei die Oberflächengüte der Kontaktflächen mit einer Rautiefe von 100 bis 200 µm ausgestattet, welche eine besonders effektive und feste Klebverbindung an den Kontaktflächen erlauben. Es hat sich gezeigt, dass bei einer Rautiefe von 150 bis 170 µm ein günstiger Kompromiss zwischen einem ausreichend geringen Fertigungsaufwand und einer ausreichenden Adhäsionswirkung zwischen der Oberfläche des Bauteils und dem Kleber erreicht werden kann. Hierbei konnte die Aufgabe der vorliegenden Erfindung, eine kostengünstige und feste Verbindung herzustellen in diesem Rauheits-Bereich am besten gelöst werden.

Mit Vorteil ist der Grundkörper aus einem anderen Material ausgebildet als das Halteelement. Insbesondere aufgrund der stoffschlüssigen Verbindung des Grundkörpers mit dem Halteelement mittels eines Klebers kann der Grundkörper aus einem anderen Material ausgebildet sein als das Halteelement. So kann insbesondere für das Halteelement ein geschmiedetes Stahlbauteil zum Einsatz kommen, während der Grundkörper beispielsweise aus Aluminium hergestellt ist. Alternativ kann auch der Grundkörper aus einem Faserverbundmaterial ausgebildet sein und das Halteelement entsprechend aus einem leichten Metall oder ebenfalls aus einem Faserverbundmaterial, welches beispielsweise mit einem anderen Matrixmaterial hergestellt ist als das des Grundkörpers. Dank der Verklebung des Halteelementes und des Grundkörpers ist dabei insbesondere eine große Variantenvielfalt in der Materialauswahl für den Grundkörper und das Halteelement möglich. Erfindungsgemäß sind die grundkörperseitige Kontaktfläche und halteseitige Kontaktfläche verschieden groß ausgebildet, derart, dass das Halteelement an einer Vielzahl von verschiedenen Positionen am Grundkörper und/oder am Achskörper festlegbar ist. Entsprechend einer erfindungsgemäßen Variante ist bei der unmittelbaren Festlegung des Grundkörpers am Halteelement über die grundkörperseitige und die halteseitige Kontaktfläche vorgesehen, dass die grundkörperseitige Kontaktfläche größer ist als die halteseitige Kontaktfläche.

Insbesondere weist diese bevorzugt eine größere Breite und/oder eine größere Höhe auf.

Auf diese Weise kann die jeweils kleinere Kontaktfläche an verschiedenen Stellen an der größeren Kontaktfläche des jeweils anderen Elementes angeordnet werden. Dies erlaubt eine Auswahl einer von einer Vielzahl von verschiedenen Befestigungspositionen des Halteelementes relativ zum Grundkörper bzw. relativ zum Achskörper. Dies dient insbesondere dazu, verschiedene Spurweiten einzustellen und insbesondere die Befestigungsmöglichkeit für das Federelement, welches am Halteelement festlegbar sein soll, an das jeweilige Fahrwerk anzupassen und somit bauraumoptimierte Lenkersysteme bereitzustellen. In einer alternativen Ausführungsform ist jeweils entweder die grundkörperseitige Kontaktfläche oder die halteseitige Kontaktfläche, oder beide Kontaktflächen, kleiner ausgebildet als die achsseitige Kontaktfläche, so dass eine Festlegung des Grundkörpers an verschiedenen Stellen am Achskörper möglich ist und/oder zusätzlich auch eine Festlegung des Halteelementes in verschiedenen Positionen am Achskörper möglich ist.

In einer erfindungsgemäßen Ausführungsform ist dabei die grundkörperseitige Kontaktfläche größer als die halteseitige Kontaktfläche, wobei bevorzugt die Höhe und/oder die Breite der grundkörperseitigen Kontaktfläche ein 1,2- bis 4-faches und mit Vorteil ein 1,5- bis 2,5-faches der korrespondierenden Höhe und/oder Breite der halteseitigen Kontaktfläche ist. Die Breite der jeweiligen Kontaktfläche wird dabei mit Vorteil parallel zur Haupterstreckungsachse des Achskörpers bzw. zur Rotationsachse der am Achskörper festlegbaren Fahrzeugräder gemessen. Die Höhe der jeweiligen Kontaktfläche wird dabei mit Vorteil senkrecht zu dieser Breite und somit senkrecht zur Rotationsachse der Räder oder zur Haupterstreckungsachse des Achskörpers gemessen. Durch das Verhältnis der Höhe oder Breite der grundkörperseitigen Kontaktfläche zur halteseitigen Kontaktfläche von 1,2 bis 4 ergibt sich eine Vielzahl von verschiedenen Befestigungspositionen des Halteelementes am Grundkörper. Dabei kann eine Variation zumindest in der Breite dafür verwendet werden, die Spur und die Befestigungsposition des Federelementes relativ zur Spurweite einzustellen. Eine Variation der Höhe kann verwendet werden, um verschieden große Federelemente am Halteelement festlegen zu können. Es hat sich gezeigt, dass der engere Bereich von 1,5 bis 2 als Verhältnis zwischen der jeweiligen Höhe und/oder der jeweiligen Breite der grundkörperseitigen und der halteseitigen Kontaktfläche für den Einsatz in Nutzfahrzeugen ausreichend ist und somit ein geringeres Übermaß der grundkörperseitigen Kontaktfläche zur halteseitigen Kontaktfläche erreicht wird, wodurch wiederum Gewicht und Bauraum gespart werden kann.

In einer besonders bevorzugten Ausführungsform weist der Grundkörper benachbart zur oder im Bereich der grundkörperseitigen Kontaktfläche einen grundkörperseitigen Eingriffsabschnitt auf, wobei das Halteelement benachbart zur oder im Bereich der halteseitigen Kontaktfläche einen halteseitigen Eingriffsabschnitt aufweist, wobei zwischen dem grundkörperseitigen und dem halteseitigen Eingriffsabschnitt ein bevorzugt unmittelbarer Formschluss herstellbar ist, welcher den Grundkörper und das Halteelement in zumindest zwei Richtungen gegen Verlagerungen zueinander sichert. Zur Unterstützung der Klebverbindung zwischen dem Grundkörper und dem Halteelement kann vorzugsweise ein im Bereich der Kontaktflächen oder benachbart zu den Kontaktflächen vorgesehener Eingriffsabschnitt sowohl am Grundkörper als auch am Halteelement vorgesehen sein, welcher zusätzliche Lasten aufnimmt. Weiterhin kann durch ein Einhaken oder Einhängen des Halteelementes am Grundkörper bei der Montage des Lenkersystems eine Lagesicherung hergestellt werden, welche über den Zeitraum des Aushärtens des Klebers die beiden Elemente in Position zueinander hält und auch danach Momente und Kräfte, welche auf die Klebefläche wirken, aufnehmen kann. Dabei bilden die Eingriffsabschnitte vorzugsweise eine unmittelbar miteinander wirkende Hinterschneidung derart, dass beispielsweise der Grundkörper und das Halteelement, nachdem Kleber auf die jeweiligen Kontaktflächen aufgetragen wurde, aneinander verhakt werden können und somit die Dauer bis zur vollständigen Aushärtung des Klebers überbrückt werden kann. Mit Vorteil sind die Eingriffsabschnitte am Grundkörper und am Halteelement bezogen auf die Schwerkraft oberhalb der übrigen Kontaktflächen, an welchen eine Verklebung hergestellt ist, ausgebildet. Hierdurch können, bei Wirken einer Kraft auf den Befestigungsabschnitt des Halteelements durch ein Federelement, im Bereich der Schnittstelle zwischen dem Grundkörper und dem Halteelement wirkende Biegemoment insbesondere durch den Eingriffsabschnitt unterstützt aufgenommen werden. Alternativ oder zusätzlich bevorzugt kann auch zumindest ein Eingriffsabschnitt benachbart und um einen oder einige Zentimeter von der nächsten Kontaktfläche beabstandet angeordnet.

Die Anordnung von Eingriffsabschnitten im Bereich oder benachbart zu den Kontaktflächen ermöglicht damit zum einen eine erleichterte Montage des Lenkersystemes und zum anderen eine höhere Festigkeit des Lenkersystemes im Einsatz.

Besonders bevorzugt ist der Kleber ein Zwei-Komponenten-Kleber. Zwei-Komponenten-Kleber haben sich insbesondere in Bezug auf die leichte Herstellung, Handhabbarkeit und die erreichbare hohe Festigkeit bewährt. Dabei ist es von Vorteil, wenn ein Epoxidharz-basierter Zwei-Komponenten-Kleber zum Einsatz kommt. Insbesondere bei der Verwendung von Faserverbundwerkstoffen zur Herstellung des Grundkörpers und/oder des Halteelementes zeichnen sich Epoxidharz-basierte Zwei-Komponenten-Kleber durch eine besonders starke atomare Verbindung zwischen dem Kleber und den jeweiligen Faserverbundteilen aus.

In einer besonders bevorzugten Ausführungsform sind die grundkörperseitige Kontaktfläche und die halteseitige Kontaktfläche gekrümmt ausgebildet. Die Krümmung der grundkörperseitigen und/oder der halteseitigen Kontaktfläche ermöglicht dabei zum einen eine besonders günstige Festlegung des jeweiligen Bauteils am vorzugsweise gekrümmt ausgebildeten Achskörpers. Zum anderen kann, wenn sowohl die grundkörperseitige als auch die halteseitige Kontaktfläche gekrümmt ausgebildet sind und diese beiden Bauteile unmittelbar aneinander festgelegt werden, nicht nur die Höhe und die axiale Position des Halteelementes relativ zum Grundkörper eingestellt werden, sondern es kann auch eine entsprechende Verschwenkung des Halteelementes passend zur jeweiligen Befestigungsposition am Grundkörper erreicht werden. Auf diese Weise lässt sich eine günstigere Anpassung der Befestigungsposition des Halteelementes am Fahrwerksystem erreichen, wobei gleichzeitig auch die entsprechende Einfederrichtung eines Federelementes, vorzugsweise einer Luftfeder, entsprechend mit berücksichtigt wird.

Bevorzugt sind die grundkörperseitige Kontaktfläche und/oder die halteseitige Kontaktfläche als Teilfläche der Mantelfläche eines Zylinder ausgebildet und spannen einen Bogenwinkel von höchstens 180°, mit Vorteil von höchstens 170° um die Zylinderachse auf. Die grundkörperseitige Kontaktfläche und/oder die halteseitige Kontaktfläche umschließen damit den Achskörper insbesondere nicht im Bereich von dessen achsseitiger Kontaktfläche. Hierdurch kann/können sowohl der Grundkörper und/oder das Halteelement seitlich an den Achskörper herangeführt und an diesem verklebt werden, was die Montage des Lenkersystems ungemein vereinfacht und dessen Flexibilität erhöht. Bei einem Bogenwinkel von 180° steht die im Betrag größtmögliche Klebefläche zur Verklebung mit dem Achsrohr zur Verfügung. Der kleinere Winkel von 170° erlaubt das Zusammenpressen des Achsrohres mit zumindest einem von Grundkörper oder Halteelement, wobei elastische Verformung beim Zusammenpressen durch einen Spalt zwischen dem Halteelement und dem Grundkörper ausgeglichen werden können.

Weitere Vorteile und Aspekte der vorliegenden Erfindung ergeben sich aus der nachfolgenden Beschreibung mit Bezug auf die beigefügten Figuren. Es zeigen:
- Fig. 1: eine erste bevorzugte Ausführungsform des erfindungsgemäßen Lenkersystems,
- Fig. 2: eine weitere bevorzugte Ausführungsform des erfindungsgemäßen Lenkersystems,
- Fig. 3: eine weitere bevorzugte Ausführungsform des erfindungsgemäßen Lenkersystems,
- Fig. 4: eine weitere bevorzugte Ausführungsform des erfindungsgemäßen Lenkersystems, und
- Fig. 5: eine weitere bevorzugte Ausführungsform des erfindungsgemäßen Lenkersystems.

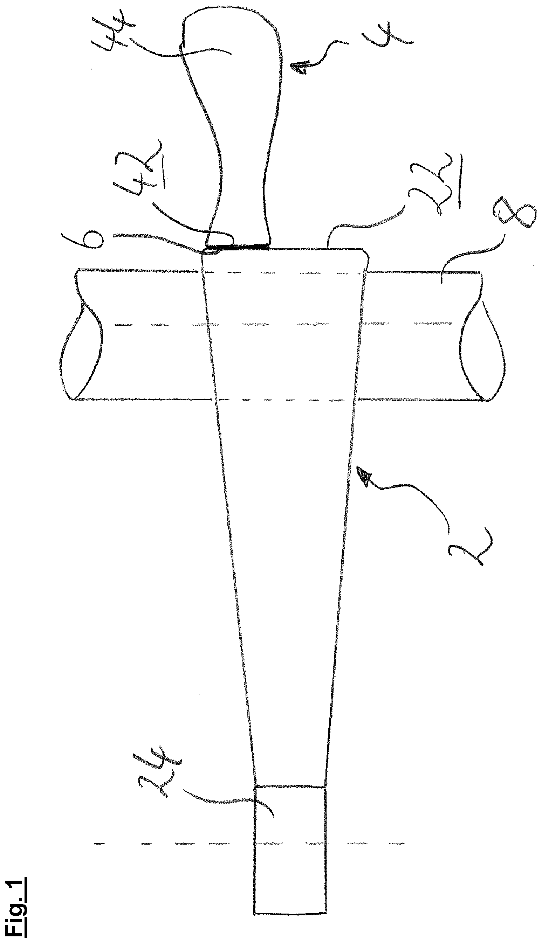

Bei dem in **Fig. 1** gezeigten Lenkersystem ist der Achskörper 8 unmittelbar am Grundkörper 2 festgelegt. Bei dieser Ausführungsform ist somit keine Klebeverbindung zwischen dem Achskörper 8 und dem Halteelement 4 vorgesehen. Stattdessen ist das Halteelement 4 über die halteseitige Kontaktfläche 42 unmittelbar an dem Grundkörper 2 und der am Grundkörper 2 angeordneten grundkörperseitigen Kontaktfläche 22 angeordnet und dort festgeklebt. Der Kleber 6 ist dabei insbesondere im Bereich zwischen der grundkörperseitigen Kontaktfläche 22 und der halteseitigen Kontaktfläche 42 angeordnet. Weiterhin weist der Grundkörper 2 an seinem in der Figur links gezeigten distalen Ende einen Lagerbereich 24 zur schwenkbaren Lagerung am Rahmen eines Nutzfahrzeuges auf. Darüber hinaus weist das Halteelement 4 einen Befestigungsabschnitt 44 zur Festlegung eines Federelements (nicht gezeigt) auf. Der Befestigungsabschnitt 44 des Halteelements 4 ist dabei vorzugsweise tellerförmig ausgebildet, so dass ein Federelement vorzugsweise vollflächig auf das Halteelement aufgesetzt werden kann und an diesem festgelegt werden kann. Bei der in Fig. 1 gezeigten Ausführungsform weist die grundkörperseitige Kontaktfläche 22 eine deutlich größere Breite auf als die halteseitige Kontaktfläche 42. Bei der in Fig. 1 gezeigten bevorzugten Ausführungsform ist die Breite der grundkörperseitigen Kontaktfläche 22 vorzugsweise 2,5- bis 3-mal so groß wie die Breite der halteseitigen Kontaktfläche 42, was eine Vielzahl von verschiedenen Befestigungspositionen des Halteelements 4 am Grundkörper 2 ermöglicht.

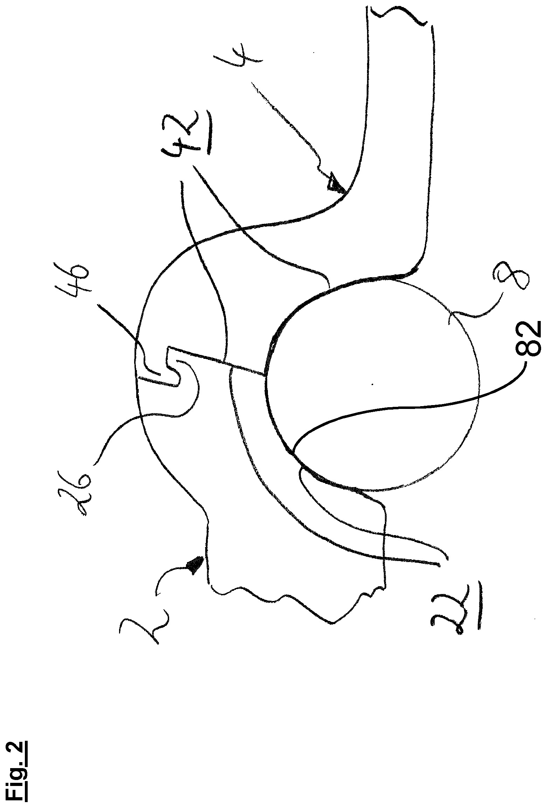

**Fig. 2** zeigt eine weitere bevorzugte Ausführungsform des Schnittstellenbereiches zwischen dem Grundkörper 2, dem Halteelement 4 und einem Achskörper 8. Dabei ist zum einen der Grundkörper 2 sowohl unmittelbar stoffschlüssig mit dem Halteelement 4 verbunden als auch unmittelbar stoffschlüssig am Achskörper 8 über eine achsseitige Kontaktfläche 82 festgelegt. Ebenso ist auch das Halteelement 4 mit dem Achskörper 8, insbesondere an dessen achsseitiger Kontaktfläche 82, verklebt. Zusätzlich zur zwischen den grundkörperseitigen und halteseitigen Kontaktflächen 22, 42 ausgebildeten Klebeverbindungen zwischen den Bauteilen, ist am Grundkörper ein grundkörperseitiger Eingriffsabschnitt 26 und am Halteelement 4 ein halteseitiger Eingriffsabschnitt 46 ausgebildet. Bei dem in Fig. 2 gezeigten Zustand sind die Eingriffsabschnitte 26, 46 bereits ineinander verhakt, so dass eine formschlüssige Festlegung des Halteelementes 4 am Grundkörper 2 vorliegt, welche insbesondere durch die Hinterschneidung zwischen den hakenförmig ausgebildeten Eingriffsabschnitten 26, 46 hergestellt ist. Es versteht sich, dass die Ausbildung von Eingriffsabschnitten gemäß der in Fig. 2 gezeigten Ausführungsform auch bei dem Beispiel von Fig. 1 zum Einsatz gelangen kann, wo die halteseitige Kontaktfläche und die grundkörperseitige Kontaktfläche 22, 42 unmittelbar aneinander ausgebildet sind und keine Verbindung zwischen dem Halteelement und dem Achskörper 8 vorliegt.

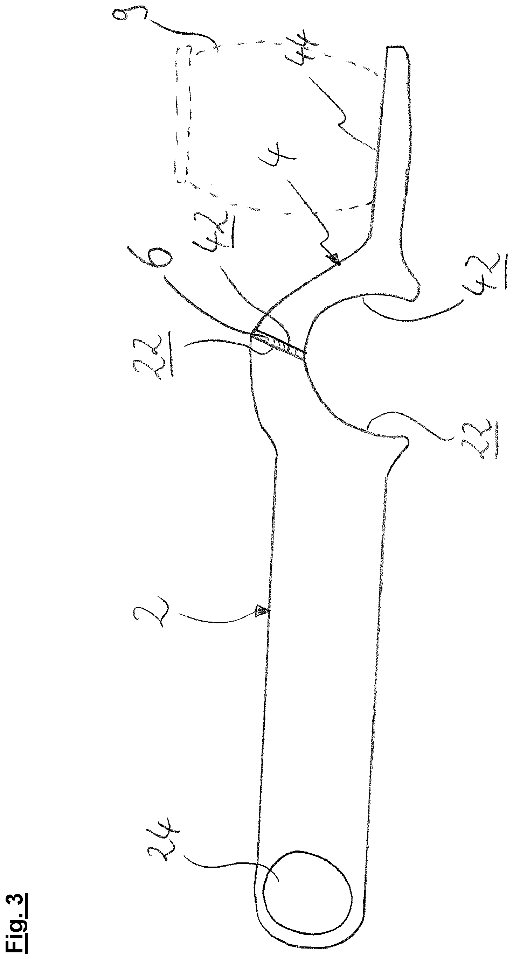

**Fig. 3** zeigt eine weitere bevorzugte Ausführungsform des erfindungsgemäßen Lenkersystems. Dabei ist zunächst nur der Verbund aus Grundkörper 2 und Halteelement 4 gezeigt, welche über eine Klebverbindung zwischen der grundkörperseitigen Kontaktfläche 22 und der halteseitigen Kontaktfläche 42 mittels eines dort eingebrachten Klebers 6 aneinander festgelegt sind. Zwischen dem Grundkörper 2 und dem Halteelement 4 ist die gerundet ausgebildete Aufnahmegeometrie für den Achskörper 8 angeordnet, welcher in Fig. 3 nicht gezeigt ist, wobei dort ebenfalls Kontaktflächen 22, 42 vorgesehen sind, an welchen eine zusätzliche Festlegung stattfinden kann. Weiterhin ist beispielhaft und gestrichelt das Federelement 9 gezeigt, welches auf dem Befestigungsabschnitt 44 des Halteelements 4 angeordnet werden kann. Aus Fig. 3 geht das bevorzugte Merkmal hervor, dass der Grundkörper 2 eine wesentlich größere Erstreckung aufweist, als das Halteelement 4. Der Grundkörper 2 sorgt somit für eine entsprechend vorteilhafte Beabstandung des Achskörpers 8 von der schwenkbaren Aufhängung am Rahmen des Nutzfahrzeuges.

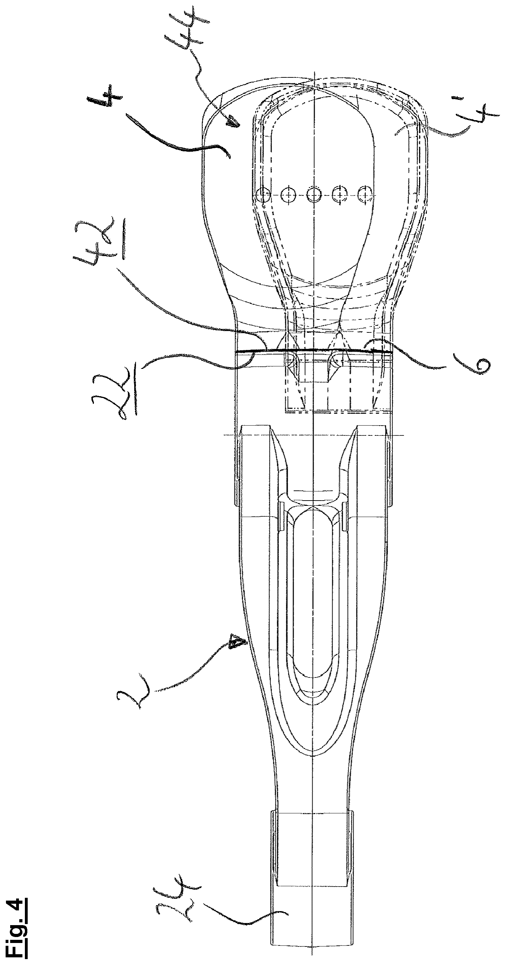

**Fig. 4** zeigt eine Draufsicht auf eine bevorzugte Ausführungsform des erfindungsgemäßen Lenkersystems, wobei ein Halteelement 4 in einer ersten bevorzugten Befestigungsposition am Grundkörper 2 gezeigt ist. Mit dem Bezugszeichen 4' ist eine alternative Befestigungsposition des Halteelements 4 am Grundkörper 2 dargestellt. Weiterhin ist gezeigt, dass die grundkörperseitige Kontaktfläche 22 und die halteseitige Kontaktfläche 42 leicht gekrümmt ausgeführt sind, wobei der Krümmungsradius deutlich größer ist als der Abstand der grundkörperseitigen Kontaktfläche 22 vom Lagerbereich 24. Durch die leichte Krümmung lässt sich eine vorteilhafte leichte Verschwenkung des Halteelements 4 von seiner ersten Befestigungsposition zu seiner zweiten Befestigungsposition 4' herstellen.

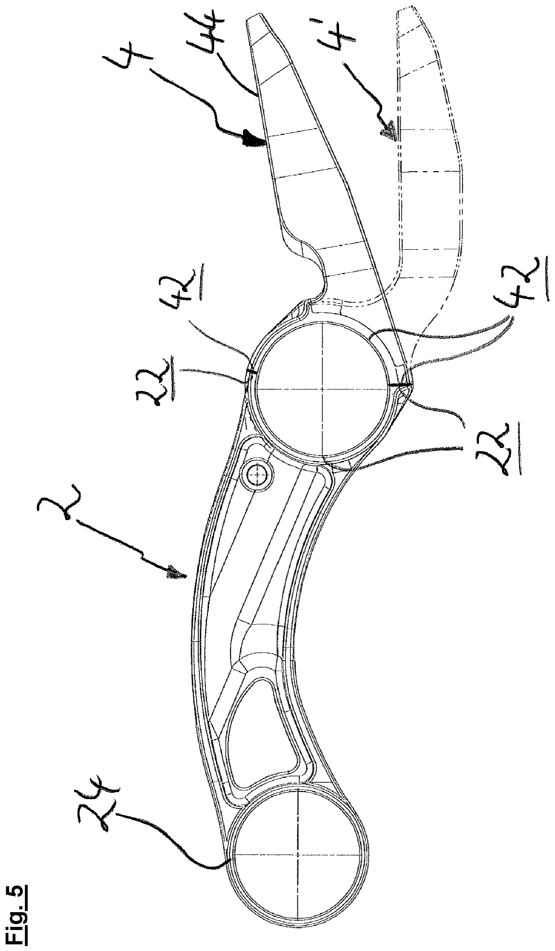

**Fig. 5** zeigt eine weitere bevorzugte Ausführungsform, wobei ein vertikaler Versatz des Halteelements 4 von einer ersten bevorzugten Befestigungsposition zu einer alternativ wählbaren zweiten Befestigungsposition, mit dem Bezugszeichen 4' dargestellt, wählbar ist. Hierdurch ist zum einen die Höhe des Befestigungsabschnittes 44 relativ zum Lagerbereich 24 am Grundkörper 2 und damit zum Rahmen des Fahrzeuges, an welchem dieser festlegbar ist, einstellbar. Zum anderen ist eine entsprechende Verschwenkung des Befestigungsabschnittes 44 zwischen den beiden Befestigungspositionen erreichbar, wodurch die Lage des Befestigungsabschnitts 44 optimal für die Federachse des Federelements 9 ausgerichtet werden kann. Es versteht sich, dass diese Ausführungsform auch mit der in den Figuren 1 oder 4 gezeigten Auswahl einer entlang der Haupterstreckungsachse des Achskörpers 8 gewählten Befestigungsposition kombiniert werden kann, so dass das Halteelement 4 sowohl in vertikaler Richtung versetzt bzw. verschwenkt angeordnet werden kann, als auch in einer horizontalen, also im Wesentlichen parallel zur Haupterstreckungsachse des Achskörpers 8 versetzt in einer jeweils bestimmten Befestigungsposition am Grundkörper 2 festlegbar ist.

### Bezugszeichenliste:

- 2: Grundkörper
- 4: Halteelement
- 6: Kleber
- 8: Achskörper
- 9: Federelement
- 22: grundkörperseitige Kontaktfläche
- 24: Lagerbereich
- 26: grundkörperseitiger Eingriffsabschnitt
- 42: halteseitige Kontaktfläche
- 44: Befestigungsabschnitt
- 46: halteseitiger Eingriffsabschnitt
- 82: achsseitige Kontaktfläche

## Patentansprüche

1. Lenkersystem, insbesondere zum Einsatz in Nutzfahrzeugen,
aufweisend einen Grundkörper (2) und ein Halteelement (4),
wobei das Halteelement (4) als separates Bauteil vom Grundkörper (2) hergestellt ist,
wobei der Grundkörper (2) eine grundkörperseitige Kontaktfläche (22) und das Halteelement (4) eine halteseitige Kontaktfläche (42) aufweist,
wobei der Grundkörper (2) an seinem ersten distalen Ende einen Lagerbereich (24) für eine schwenkbare Aufhängung aufweist,
wobei die grundkörperseitige Kontaktfläche (22) an dem ersten distalen Ende gegenüberliegenden Ende des Grundkörpers (2) angeordnet ist,
wobei das Halteelement (4) einen Befestigungsabschnitt (44) zur Festlegung eines Federelements (9) aufweist, wobei
das Halteelement (4) mittels eines zwischen der grundkörperseitigen Kontaktfläche (22) und der halteseitigen Kontaktfläche (42) eingebrachten Klebers (6) unmittelbar am Grundkörper (2) festgelegt ist,
**dadurch gekennzeichnet,dass**
a) die grundkörperseitige Kontaktfläche (22) größer als die halteseitige Kontaktfläche (42) ist, so dass das Halteelement (4) an einer Vielzahl von verschiedenen Positionen am Grundkörper (2) festlegbar ist, und/oder
b) dass ein Achskörper (8) mit einer achsseitigen Kontaktfläche (82) vorgesehen ist,
wobei der Grundkörper (2) mittels eines zwischen der grundkörperseitigen Kontaktfläche (22) und der achsseitigen Kontaktfläche (82) eingebrachten Klebers (6) unmittelbar am Achskörper (8) festgelegt ist, und
wobei das Halteelement (4) mittels eines zwischen der achsseitigen Kontaktflächen (82) und der halteseitigen Kontaktfläche (42) eingebrachten Klebers (6) am Achskörper (8) festgelegt ist.

2. Lenkersystem (1) nach Anspruch 1, wobei zwischen dem Grundkörper (2) und dem Halteelement (4) und zwischen dem Grundkörper (2) und dem Achselement (8) und zwischen dem Haltelement (4) und dem Achselement (8) eine Klebverbindung mittels des Klebers (6) herstellbar oder hergestellt ist.

3. Lenkersystem nach einem der vorhergehenden Ansprüche, wobei zumindest eine der Kontaktflächen (22, 42, 82) eine Rautiefe von 100 - 200 µm, vorzugsweise von ca. 150 - 170 µm aufweist.

4. Lenkersystem nach einem der vorhergehenden Ansprüche, wobei der Grundkörper (2) aus anderem Material ausgebildet ist als das Halteelement (4).

5. Lenkersystem nach Anspruch 4,
wobei der Grundkörper (2) aus Aluminium hergestellt ist, und
wobei das Halteelement (4) aus Kunststoff oder Stahl ausgebildet ist.

6. Lenkersystem nach einem der vorhergehenden Ansprüche, wobei die Höhe und/oder die Breite der grundkörperseitigen Kontaktfläche (22) ein 1,2- bis 4-faches und mit Vorteil ein 1,5- bis 2,5-faches der korrespondierenden Höhe und/oder Breite der halteseitigen Kontaktfläche (42) ist.

7. Lenkersystem nach einem der vorhergehenden Ansprüche,
wobei der Grundkörper (2) benachbart zur oder im Bereich der grundkörperseitigen Kontaktfläche (22) einen grundkörperseitigen Eingriffsabschnitt (26) aufweist,
wobei das Halteelement (4) benachbart zur oder im Bereich der halteseitigen Kontaktfläche (42) einen halteseitigen Eingriffsabschnitt (46) aufweist,
wobei zwischen dem grundkörperseitigen und dem halteseitigen Eingriffsabschnitt (26, 46) ein bevorzugt unmittelbarer Formschluss herstellbar ist, welcher den Grundkörper (2) und das Halteelement (4) in zumindest zwei Richtungen gegen Verlagerung zueinander sichert.

8. Lenkersystem nach einem der vorhergehenden Ansprüche, wobei der Kleber (6) ein Zwei-Komponenten-Kleber ist.

9. Lenkersystem nach einem der vorhergehenden Ansprüche, wobei die grundkörperseitige Kontaktfläche (22) und die halteseitige Kontaktfläche (42) gekrümmt ausgebildet sind.

10. Lenkersystem nach einem der vorhergehenden Ansprüche, wobei die grundkörperseitige Kontaktfläche (22) und/oder die halteseitige Kontaktfläche (42) als Teilfläche der Mantelfläche eines Zylinders ausgebildet sind und einen Bogenwinkel von höchstens 180°, mit Vorteil von höchstens 170° um die Zylinderachse aufspannen.

## Claims

1. Steering system, in particular for use in commercial vehicles,
having a base body (2) and a retaining element (4),
wherein the retaining element (4) is manufactured as a separate component from the base body (2),
the base body (2) having a contact surface (22) on the base body side and the retaining element (4) having a contact surface (42) on the retaining side, wherein the base body (2) has a bearing area (24) for a pivotable suspension at its first distal end,
wherein the contact surface (22) on the base body side is arranged at the end of the base body (2) opposite the first distal end,
wherein the retaining element (4) has a fastening section (44) for fastening a spring element (9),
wherein the retaining element (4) is fixed directly to the base body (2) by means of an adhesive (6) introduced between the contact surface (22) on the base body side and the contact surface (42) on the retaining side, **characterized in that**
a) the contact surface (22) on the base body side is larger than the contact surface (42) on the holding side, so that the holding element (4) can be fixed at a plurality of different positions on the base body (2), and/or
b) an axle body (8) with an axle-side contact surface (82) is provided, the base body (2) being fixed directly to the axle body (8) by means of an adhesive (6) introduced between the contact surface (22) on the base body side and the contact surface (82) on the axle side, and
the retaining element (4) being fixed to the axle body (8) by means of an adhesive (6) introduced between the contact surface (82) on the axle side and the contact surface (42) on the retaining side.

2. Steering system (1) according to claim 1, wherein an adhesive connection can be produced or is produced between the base body (2) and the retaining element (4) and between the base body (2) and the axle element (8) and between the retaining element (4) and the axle element (8) by means of the adhesive (6).

3. A handlebar system according to any one of the preceding claims, wherein at least one of the contact surfaces (22, 42, 82) has a roughness depth of 100 - 200 µm, preferably of about 150 - 170 µm.

4. Handlebar system according to one of the preceding claims, wherein the base body (2) is formed from a different material than the retaining element (4).

5. Handlebar system according to claim 4,
wherein the base body (2) is made of aluminium, and
wherein the retaining element (4) is made of plastic or steel.

6. Handlebar system according to one of the preceding claims, wherein the height and/or the width of the contact surface (22) on the base side is 1.2 to 4 times, and advantageously 1.5 to 2.5 times, the corresponding height and/or width of the contact surface (42) on the support side.

7. A handlebar system according to any one of the preceding claims,
wherein the base body (2) has an engagement section (26) on the base body side adjacent to or in the region of the contact surface (22) on the base body side,
wherein the retaining element (4) has a retaining-side engagement portion (46) adjacent to or in the region of the retaining-side contact surface (42), wherein between the engagement section (26, 46) on the base body side and the engagement section (26, 46) on the retaining side a preferably direct form closure can be produced which secures the base body (2) and the retaining element (4) against displacement relative to one another in at least two directions.

8. Handlebar system according to any of the preceding claims, wherein the adhesive (6) is a two-component adhesive.

9. Handlebar system according to one of the preceding claims, wherein the contact surface (22) on the base body side and the contact surface (42) on the holder side are curved.

10. Steering system according to one of the preceding claims, wherein the contact surface (22) on the base body side and/or the contact surface (42) on the retaining side are formed as a partial surface of the circumferential surface of a cylinder and span an arc angle of at most 180°, advantageously at most 170°, about the cylinder axis.

## Revendications

1. Système de bras de suspension, en particulier pour l'utilisation dans des véhicules utilitaires,
comprenant un corps de base (2) et un élément de retenue (4), dans lequel
l'élément de retenue (4) est réalisé sous forme de pièce séparée du corps de base (2),
le corps de base (2) présente une surface de contact (22) côté corps de base, et l'élément de retenue (4) présente une surface de contact (42) côté retenue,
le corps de base (2) présente, à sa première extrémité distale, une zone de montage (24) pour une suspension pivotante,
la surface de contact (22) côté corps de base est disposée à l'extrémité du corps de base (2) opposée à la première extrémité distale,
l'élément de retenue (4) comprend une portion de fixation (44) pour immobiliser un élément de ressort (9),
l'élément de retenue (4) est immobilisé directement sur le corps de base (2) au moyen d'une colle (6) introduite entre la surface de contact (22) côté corps de base et la surface de contact (42) côté retenue,
**caractérisé en ce que**
la surface de contact (22) côté corps de base est plus grande que la surface de contact (42) côté retenue, de sorte que l'élément de retenue (4) peut être immobilisé sur le corps de base (2) 9dans une multitude de positions différentes,
et/ou
**en ce qu'**il est prévu un corps d'essieu (8) ayant une surface de contact (82) côté essieu,
le corps de base (2) étant immobilisé directement sur le corps d'essieu (8) au moyen d'une colle (6) introduite entre la surface de contact (22) côté corps de base et la surface de contact (82) côté essieu, et
l'élément de retenue (4) étant immobilisé sur le corps d'essieu (8) au moyen d'une colle (6) introduite entre la surface de contact (82) côté essieu et la surface de contact (42) côté retenue.

2. Système de bras de suspension (1) selon la revendication 1, dans lequel une liaison par collage peut être réalisée ou est réalisée au moyen de la colle (6) entre le corps de base (2) et l'élément de retenue (4) et entre le corps de base (2) et l'élément d'essieu (8) et entre l'élément de retenue (4) et l'élément d'essieu (8).

3. Système de bras de suspension selon l'une des revendications précédentes, dans lequel l'une au moins des surfaces de contact (22, 42, 82) présente une profondeur de rugosité de 100 à 200 µm, de préférence d'environ 150 à 170 µm.

4. Système de bras de suspension selon l'une des revendications précédentes, dans lequel le corps de base (2) est réalisé en un matériau différent de celui de l'élément de retenue (4).

5. Système de bras de suspension selon la revendication 4,
dans lequel le corps de base (2) est fabriqué en aluminium, et
l'élément de retenue (4) est réalisé en matière plastique ou en acier.

6. Système de bras de suspension selon l'une des revendications précédentes, dans lequel la hauteur et/ou la largeur de la surface de contact (22) côté corps de base est 1,2 à 4 fois, de préférence 1,5 à 2,5 fois, la hauteur et/ou la largeur correspondante de la surface de contact (42) côté retenue.

7. Système de bras de suspension selon l'une des revendications précédentes,
dans lequel le corps de base (2) présente, au voisinage ou dans la zone de la surface de contact (22) côté corps de base, une portion d'engagement (26) côté corps de base,
l'élément de retenue (4) présente, au voisinage ou dans la zone de la surface de contact (42) côté retenue, une portion d'engagement (46) côté retenue,
une liaison par complémentarité de forme, de préférence directe, peut être établie entre les portions d'engagement (26, 46) côté corps de base et côté retenue, laquelle bloque le corps de base (2) et l'élément de retenue (4) dans au moins deux directions pour empêcher un déplacement l'un par rapport à l'autre.

8. Système de bras de suspension selon l'une des revendications précédentes, dans lequel la colle (6) est une colle à deux composants.

9. Système de bras de suspension selon l'une des revendications précédentes, dans lequel la surface de contact (22) côté corps de base et la surface de contact (42) côté retenue sont incurvées.

10. Système de bras de suspension selon l'une des revendications précédentes, dans lequel la surface de contact (22) côté corps de base et/ou la surface de contact (42) côté retenue sont réalisées sous forme de surface partielle de la surface enveloppe d'un cylindre et définissent un angle d'arc de 180° au maximum, de préférence de 170° au maximum, autour de l'axe du cylindre.
